Europäisches Patentamt

European Patent Office

Office européen des brevets

(11) Numéro de publication : **0 509 891 A1**

## (12) DEMANDE DE BREVET EUROPEEN

(21) Numéro de dépôt : **92401019.2**

(22) Date de dépôt : **10.04.92**

(51) Int. Cl.⁵ : **B01J 20/32,** C12H 1/02

(30) Priorité : **15.04.91 FR 9104533**

(43) Date de publication de la demande :
**21.10.92 Bulletin 92/43**

(84) Etats contractants désignés :
**AT BE CH DE DK ES FR GB GR IT LI LU NL PT SE**

(71) Demandeur : **CECA S.A.**
**4 - 8, Cours Michelet La Défense 10**
**F-92800 Puteaux (FR)**

(72) Inventeur : **Dufour, Pascal**
**290, Avenue d'Argenteuil**
**F-92600 Asnières/Seine (FR)**

(74) Mandataire : **Haicour, Philippe**
**Elf Atochem S.A., D.P.I. La Défense 10 - Cédex 42**
**F-92091 Paris La Defense (FR)**

(54) **Auxiliaire technologique pour la clarification par filtration des liquides alimentaires et procédé de clarification des liquides alimentaires.**

(57)    On présente un nouvel auxiliaire technologique pour la clarification par filtration des liquides alimentaires constitué d'un agent filtrant préemballé dans un film hydrosoluble, préférentiellement en alcool polyvinylique, l'agent filtrant contenant en outre des agents de précipitation de l'alcool polyvinylique destiné à l'éliminer sous forme de complexe insoluble retenu dans le filtre. Application à la clarification de la bière et des vins.

EP 0 509 891 A1

La présente invention se rapporte à un procédé de clarification des liquides alimentaires aqueux, fermentés ou non fermentés, et plus particulièrement du vin, de la bière ou du cidre.

La clarification des liquides fait appel à la filtration en présence d'adjuvants de filtration appelés communément agents filtrants. Ces adjuvants de filtration sont des celluloses, des perlites expansées, ou des diatomées calcinées ou activées au carbonate ou au chlorure de sodium. Ils se présentent sous forme de poudres dont la manipulation provoque inévitablement l'émission de poussières dont on connaît les nombreux inconvénients, tant sur le plan de la tenue des locaux et du bon fonctionnement des matériels, que sur celui des risques d'altération de la santé des personnels exposés à inhaler ces poussières.

La présente invention remédie à ces inconvénients grâce au conditionnement des agents filtrants dans un emballage étanche hydrosoluble, conçu de telle manière que c'est l'ensemble agent filtrant + emballage non ouvert qui est introduit dans les cuves de préparation, évitant la dispersion des poussières dans l'atmosphère des locaux de travail.

On trouve dans le commerce des emballages hydrosolubles fabriqués essentiellement à partir d'alcool polyvinylique (PVA). Leur développement a été limité à des applications dans lesquelles le film hydrosoluble est éliminé avec les liquides dans lesquels il a été dissous. Par exemple, en milieu hospitalier, le linge ou les vêtements contaminés par les malades sont enveloppés dans de tels emballages et envoyés, emballage compris, dans une machine à laver ou l'enveloppe se dissout et sa matière est éliminée avec les eaux de lavage. Le conditionnement des poudres détergentes pour le lavage de la lingerie ou de la vaisselle s'est également développé (voir par exemple les demandes de brevet japonais SP 62 004800 ou SP 01 0234900). L'emballage, après dissolution est également rejeté à l'égout avec les eaux de lavage. La matière de tels emballages doit se dissoudre rapidement sans former d'agglomérats ou de fils susceptibles de s'enrouler autour des pales des agitateurs ou de bloquer les clapets des pompes des circuits de transport de fluides ou de vidange. L'emballage doit être résistant aux chocs, aux déchirures, aux tractions exercés lors des manipulations. L'emballage soluble a été également préconisé pour le conditionnement des produits chimiques pour l'agriculture (voir US 148170). Mais l'application de ce principe aux agents de clarification de boissons fermentées ou non fermentées se heurte au fait que la dissolution de l'emballage en fait passer la substance dans le liquide à clarifier. Cette substance doit alors répondre, non seulement à des conditions élémentaires d'inertie et de non toxicité, mais également aux exigences de la réglementation en matière d'additifs alimentaires instaurée par la loi de 1908. Il y a là un handicap majeur qui explique qu'une telle utilisation n'ait jamais été tentée jusqu'à présent dans l'industrie agro-alimentaire (filtration de la bière, des vins, du cidre et toute liqueur ou boisson alimentaire apparentée).

La meilleure façon d'écarter toute préoccupation relative à des substances introduites dans un liquide alimentaire est de les en éliminer. Il est donc souhaitable que la matière d'emballage d'un adjuvant de filtration possède cette qualité d'auxiliaire technologique, et que si elle a été dissoute, elle reprécipite aussi rapidement que possible et suive le sort dudit auxiliaire technologique.

La présente invention consiste donc en une nouvelle forme d'auxiliaire technologique pour la clarification des liquides alimentaires constitué d'un agent de filtration enfermé dans une enveloppe étanche faite d'un film hydrosoluble, l'agent de filtration étant lui-même additionné d'un composé susceptible de précipiter toute la substance hydrosoluble constitutive de l'enveloppe dissoute dans le liquide alimentaire.

Les agents filtrants sont des diatomées calcinées ou calcinées-activées (on entend par diatomées calcinées, les produits issus de la calcination simple de la diatomite naturelle, et par diatomées calcinées-activées, celles qui sont issues d'une calcination avec agents fondants, dont principalement le carbonate de sodium), des perlites, des fibres de cellulose, des fibres de polyéthylène, seuls ou en mélange. Leur perméabilité et leur granulométrie en sont évidemment des caractéristiques essentielles. On mesure communément cette perméabilité en darcys, le darcy étant la perméabilité d'un lit poreux de 1 cm de haut et 1 cm$^2$ de section à travers lequel s'écoule un fluide dont la viscosité est de 1 mPa.s (ou 1 centipoise) avec un débit de 1 cm$^3$/seconde sous une différence de pression appliquée de 1 atmosphère ; un darcy vaut 0,987 10$^{-12}$ m$^2$, soit à peu près 1 pm$^2$.

La matière constitutive de l'enveloppe soluble sera un polymère soluble filmogène. On a retenu pour l'invention l'alcool polyvinylique. L'alcool polyvinylique utile pour l'invention est pris sous forme d'un film d'une épaisseur de 25 à 200 microns, qui contient environ 8% de glycérine (glycérine codex), 9,8% d'amidon et de talc, 0,2% de cations et anions divers, le complément (82%) étant l'alcool polyvinylique. Les concentrations en métaux lourds (Ba, Hg, Cd, Pb, V, Ni) sont globalement inférieures à 2 ppm, celle de l'arsenic est inférieure à 2 ppm, ce en quoi on respecte les prescriptions du Codex oenologique international (édition 1978, remise à jour en 1989, de l'Office international de la Vigne et du Vin, 11, rue Roquépine, Paris). L'alcool polyvinylique est réputé n'être pas toxique. Il a été parfois utilisé pour le collage des vins, c'est-à-dire l'opération par laquelle on débarrasse le vin de certains de ses constituants indésirables, par exemple colloïdes et substances en suspension, ou la correction de leur trop forte teneur en tanins, notamment en Arménie soviétique (voir N.B. Kazumov et coll., Prom-st., Arm., 6, 503, 1976). D'autre part, les compositions d'alcool polyvinylique, telles que formulées dans les films du commerce sont également reconnues n'être pas dangereuses. La toxicité orale aiguë sur rats femelles est nulle ($DL_{50}$ > 5.000 milligrammes par kg) ; la toxicité aiguë vis à vis du cyprin doré est de même négligeable ($DL_{50}$ après 48 et 96 heures > 500 milligrammes par litre). Le produit en solution aqueuse à 25% n'est pas irritant vis-à-vis de la peau et des muqueuses de lapin selon le mode opératoire préconisé par l'U.S. Federal Food and Drugs Administration. Il est cependant préférable de l'éliminer des liquides alimentaires dans lesquels il a été introduit. Ce rôle d'élimination du PVA est dévolu dans la présente invention aux agents de précipitation.

Les agents de collage que l'on utilise ordinairement dans la fabrication des boissons alimentaires sont par exemple des composés tanniques (tanins), des gélatines, des bentonites, des sols de silice, des caséines ou des colles de poisson, utilisés seuls ou en mélange. Les agents de précipitation préférés pour l'invention sont les composés tanniques. Ils présentent en outre l'avantage d'être des produits admis dans le traitement des liquides alimentaires, et particulièrement des bières (brewtan) ou des vins (tanins oenologiques qui sont, selon leur degré de raffinage, des substances chamois ou jaunâtres, voire blanches, que l'on extrait de la noix de galle, de divers bois, par exemple châtaignier, chêne, tara, ou encore des pépins de raisin ; ils sont constitués d'un mélange de glucosides, d'acide gallique ou ellagique, de cathéchol). Comme il est inconcevable d'utiliser de larges excès de telles substances tanniques dans le seul rôle d'assurer la précipitation de la totalité de l'alcool polyvinylique, il a été nécessaire d'aménager ou de mettre au point des méthodes de dosage du PVA contenu dans les boissons alimentaires (eaux, vins, bières...).

Une méthode mise au point par la demanderesse pour le dosage rapide de l'alcool polyvinylique résiduel dans les vins est basée sur la propriété des tanins de précipiter l'alcool polyvinylique (voir la publication soviétique de Kazumov). En présence d'alcool polyvinylique, un vin rouge développe une turbidité qui est fonction de la quantité d'alcool polyvinylique ; on peut ainsi utiliser un vin rouge étalonné pour sa courbe de réponse en turbidité NTU selon la méthode développée par la société HACH (Colorado, USA) et décrite dans Standart Methods for the Examination of Water and Waste Water (15e édition), en fonction de la concentration en alcool polyvinylique comme agent titrant de l'alcool polyvinylique dans un autre vin. Cette méthode est exposée en détail dans l'exemple 1.

L'invention consiste également en un procédé perfectionné de clarification des liquides alimentaires comportant une étape de filtration avec mise en oeuvre d'un auxiliaire de filtration. Ces liquides, et plus particulièrement les produits de fermentations contiennent en suspension des matières organiques telles des protéines, des complexes polyphénols-protéines ou des micro-organismes, des produits de contamination, argiles et particules solides diverses, des cristaux comme les tartrates, qui nuisent à la limpidité, mais aussi aux qualités gustatives et à la conservation de ces produits. Leur filtration n'est pas aisée, car ces produits ont une forte tendance à colmater les filtres. On procède alors à une filtration, dite filtration par alluvionnage en présence d'agents filtrants.

Dans l'opération de filtration par alluvionnage, on commence par monter une couche filtrante, communément appelée première précouche, d'environ 1 mm d'épaisseur, par recirculation sur une toile métallique de maille 50 µm à 200µm ou sur un support de carton, avec un agent filtrant, généralement une diatomite calcinée-activée (de perméabilité voisine de 1 darcy). Cette première précouche a un rôle mécanique. Sur cette première précouche et dans les mêmes conditions, on monte une seconde précouche dont le rôle est cette fois de retenir les particules en suspension dans le liquide à filtrer. Pour garantir des cycles longs de filtration, on ajoute en continu dans le liquide à filtrer de l'agent filtrant prélevé à partir de la cuve d'alluvionnage ou de préparation. Le procédé selon l'invention consiste à utiliser au lieu et place des agents de filtration pulvérulents extraits de sacs, les agents conditionnés selon l'invention avec leur enveloppe soluble, ce qui élimine tous les inconvénients qui résultent de la manipulation des solides divisés, notamment envolements et chutes de poudre. Pour la réalisation pratique de l'invention, l'agent de filtrant est conditionné dans une enveloppe d'alcool polyvinylique, elle-même suremballée dans un sac ordinaire de papier ou de plastique. Ce suremballage du sac d'alcool polyvinylique est recommandé pour des raisons d'hygiène (protection du film d'alcool polyvinylique des salissures externes) et de protection contre un excès d'humidité ambiante. Le suremballage est ôté au moment de l'emploi.

Le procédé est particulièrement avantageux pour la clarification des vins rouges et de leurs moûts. Ces liquides contiennent des substances diverses susceptibles de précipiter spontanément l'alcool polyvinylique. Et de fait, on a vérifié que cette rétention du PVA par de tels vins lors de la filtration avec des agents filtrants emballés dans un film d'alcool polyvinylique était possible sans ajout de l'agent de précipitation. C'est ainsi qu'après l'introduction de faibles quantités d'alcool polyvinylique, correspondant à la dispersion 0,04 g de film de PVA par litre de vin rouge, on ne retrouve pratiquement pas en solution d'ingrédient provenant du film, notamment alcool polyvinylique, amidon et talc. La teneur en glycérine s'est accrue d'environ 30 milligrammes par litre, quantité négligeable à comparer à une teneur courante de 1,5 g/l provenant de la fermentation naturelle des vins. Mais d'une façon générale, il est préférable d'assurer la précipitation totale de l'alcool polyvinylique,

3

par une quantité stoechiométrique d'un agent de collage tel que la gélatine ou le sol de silice pour des vins faiblement chargés en tanins. Il est d'ailleurs souhaitable d'utiliser un tel agent de précipitation lors de l'introduction de doses nettement inférieures à ce dosage, de façon à ne pas épuiser le vin de ses tanins naturels.

L'addition d'agents de précipitation du PVA est nécessaire pour la filtration des vins blancs et rosés et de la bière.

On a pu constater que le traitement des vins rouges et autres boissons par les agents de filtration selon l'invention n'en altère pas sensiblement les propriétés gustatives.

Différentes variantes du procédé et leurs avantages sont décrits dans les exemples qui suivent, lesquels relatent des filtrations sur agents diatomitiques; elles pourraient tout aussi bien être transposées à des agents perlitiques ou cellulosiques sans sortir du cadre de l'invention.

Exemple 1

Le présent exemple décrit le comportement du PVA au sein d'un vin naturellement riche en tanins et illustre la manière dont on peut utiliser le phénomène de précipitation du PVA par les substances tanniques naturelles d'un vin rouge pour détecter la présence de PVA en solution dans un liquide aqueux.

Dans 100 ml de vin filtré des Côtes du Rhône , on introduit des quantités croissantes de film polyvinylique, Nedol EF 220, respectivement 0,004, 0,01, 0,025 et 0,05 g (quantités qui sont de l'ordre de grandeur de celles qui seraient introduites dans un vin ou un moût par des agents filtrants en sacs 50 g à 25 kg emballés dans des films d'emballage d'alcool polyvinylique de 20-30 $\mu$m d'épaisseur. On constate l'apparition d'un trouble, que l'on mesure en unités de turbidité NTU selon Hach. On rappelle que cette méthode est basée sur la mesure de la lumière diffusée latéralement à partir d'une solution trouble, et qu'elle est étalonnée en préparant une formazine étalon préparée extemporanément par dissolution dans un litre d'eau de cinq grammes de sulfate d'hydrazine et de cinquante grammes d'hexaméthylènetétramine; cette solution développe par définition une turbidité de 4.000 NTU en 24 heures.

On a constaté que la turbidité du vin additionné de PVA évoluait dans le temps, mais qu'aux environs de 50 minutes, elle restait suffisamment stable pour que des mesures significatives puisse en être faites. A titre indicatif, on a obtenu dans le cas présent les chiffres suivants à 50 minutes.

| PVA ajouté (g/l) | Turbidités NTU |
|---|---|
| 0,04 | 2,9 |
| 0,1 | 5,3 |
| 0,25 | 6,8 |
| 0,5 | 6,5 |

L'addition de ce vin riche en tanins à une autre liqueur contenant de l'alcool polyvinylique en solution y engendre un trouble qui peut servir d'indicateur de présence de PVA et même d'en donner l'ordre de grandeur. On a ici procédé par additions successives d'aliquotes de 10 ml de ce vin rouge des Côtes du Rhône dans des prises de 100 ml de ce même vin préalablement mis en contact avec des quantités variables de film d'alcool polyvinylique. Après une première filtration du vin traité, on a procédé par additions successives d'aliquotes de vin "titrant" et filtrations des solutions troubles, en mesurant les turbidités NTU à chaque étape. Les résultats obtenus figurent ci-après.

| Turbidités NTU | | | | |
|---|---|---|---|---|
| PVA initialement ajouté(g/l) | 0,04 | 0,1 | 0,25 | 0,5 |
| 1ère filtration | 0,50 | 0,40 | 0,67 | 0,57 |
| 1er ajout de 10 ml | 0,55 | 0,40 | 0,74 | 1,6 |
| 2e filtration | | | 0,32 | 0,5 |
| 2e ajout de 10 ml | | | 0,4 | 0,85 |
| 3e filtration | | | | 0,45 |
| 3e ajout de 10 ml | | | | 0,45 |

Ces résultats montrent au passage que le vin des Côtes du Rhône utilisé ne contient pas suffisamment de tanins naturels pour insolubiliser plus de 0, 25 g/l d'alcool polyvinylique. Pour des teneurs supérieures, il est donc nécessaire de prévoir l'utilisation d'un agent de précipitation artificiel.

Exemple 2

On filtre un vin (Côtes du Rhône de l'exemple 1) dans une installation de type traditionnel, comportant une cuve de vin à filtrer d'une capacité d'environ 200 litres, un filtre (filtre pilote VELO SPA modèle 0063) et une cuve de préparation d'une capacité d'environ 1 litre. On commence par déposer sur la toile filtrante une précouche de 1 mm d'agent filtrant constitué de diatomées calcinées-activées de perméabilité 1 darcy (ici Clarcel® DIC/B de CECA S.A.). Dans la cuve de préparation contenant 0,25 litre de vin, on introduit un sachet contenant 20 g de diatomées calcinées de perméabilité 65 millidarcys (ici Clarcel® CBL de CECA S.A.) mélangées à 0,03 g de gélatine AT 50 de Rousselot, le tout emballé dans un sac hermétique soudé en alcool polyvinylique de NEDI, qualité Nedol® EF 220, d'un poids de 0,76 g. Il flotte un instant à la surface du vin, et après la dissolution de l'emballage qui survient rapidement, son contenu est libéré par gravité, sans qu'il y ait émission de poussière dans le local de travail. Une introduction de 12 g d'un sol de silice, de qualité oenologique, c'est-à-dire conforme au Codex Oenologique, 1978, p. 32, modifié par l'arrêté du 1er octobre 1990, titrant 40% de silice, (ici CECASOL® de CECA S.A.) agissant comme agent floculant permet la précipitation immédiate de la matière de l'emballage dans la cuve de préparation contenant l'agent filtrant diatomitique.

L'opération de filtration elle-même consiste à envoyer en même temps sur le filtre le vin à clarifier et la suspension contenue dans la cuve d'alluvionnage, dans la proportion de 7,75 litres de vin à clarifier pour 0,25 litre de suspension.

On filtre ainsi à raison de 60 1/h en continu jusqu'à ce que le remplissage ou la saturation du filtre par le Clarcel®, indique qu'il est temps d'arrêter la filtration et de débâtir les gâteaux. Il est évidemment nécessaire de réapprovisionner régulièrement la cuve d'alluvionnage tous les 8 litres de vin filtré pour permettre la poursuite de la filtration dans les conditions indiquées ci-dessus.

Les effets du collage du vin à la gélatine et de sa filtration, respectivement sans emballage en alcool polyvinylique et avec conditionnement sous alcool polyvinylique, avec ou sans agent floculant, sont résumés ci-dessous. Le tableau donne les turbidités d'un vin rouge initialement non filtré dont la turbidité naturelle est de 409 NTU, soumis à divers traitements floculants générateurs de trouble, les turbidités étant mesurées après introduction de la formulation floculante, après sa filtration, après introductions successives du réactif de détection de PVA constitué par le même vin à 409 NTU non traité et le cas échéant filtrations, la prise d'essai de vin traité étant de 100 ml et les aliquotes de vin "titrant" étant de 10 ml. Le traitement témoin correspond au vin traité uniquement avec l'agent de collage (gélatine).

| Traitement floculant | Témoin | sans PVA + agent précipitant | avec PVA + agent précipitant | avec PVA sans agent précipitant |
|---|---|---|---|---|
| Introduction des produits traitants | 409 | 1030 | 1100 | 503 |
| Filtration | 2,5 | 2,1 | 9,5 | 9,8 |
| ajout de 10ml de vin 409 NTU | 41 | 30 | 26 | 50 |
| filtration | 2,0 | 1,8 | 3,1 | 7 |

On constate que les divers traitements ne laissent presque plus d'alcool polyvinylique en solution dans le vin, mais que dans les conditions de l'invention, c'est-à-dire lorsqu'on est en présence de PVA, il y a intérêt à utiliser l'agent de précipitation à base de sol de silice colloïdale et de gélatine afin d'éviter un appauvrissement excessif des vins rouges en tanins naturels. Comme la précipitation par cet agent est estimé à 60-70%, le PVA restant est éliminé par les tanins naturels et sa teneur résiduelle est estimée inférieure au milligramme par litre.

Exemple 3

La plupart des vins blancs ne contiennent pas de tanins naturels ou très peu. C'est pourquoi les 0,01 à 0,5 g/l de PVA introduits par l'intermédiaire du conditionnement soluble se retrouvent dans le vin blanc. Dans le présent exemple on procède à une filtration en continu comme dans l'exemple précédent sur un vin blanc de muscadet de Sèvres et Maine ne contenant pas la quantité de tanins nécessaire à la précipitation de l'alcool polyvinylique. L'agent de précipitation ici utilisé est le tanin oenologique extrait du tara, commercialisé par l'Institut oenologique de Champagne.

Dans une cuve d'alluvionnage dont la capacité est de deux litres, on a mis en suspension 250 g de Clarcel® CBL dans 1,7 litres de vin blanc, l'agent de suspension étant constitué de 250 g de Clarcel® emballés dans un film d'alcool polyvinylique Nedol® EF 220 (NEDI), pesant lui-même 3,75 g. Le pH mesuré du vin est de 3. On a ensuite versé dans la cuve de vin 180 ml d'une solution à 1% de tanin pour oenologie, ce qui a provoqué la précipitation immédiate de l'alcool polyvinylique. Le contenu de cette cuve est dirigé en même temps que 98 litres de vin à clarifier sur le filtre VELO SPA équipé d'une précouche comme dans l'exemple 2; on filtre à raison de 100 litres à l'heure.

Un échantillon est prélevé dans la cuve de vin filtré pour tester la présence de l'alcool polyvinylique. Un dosage colorimétrique (selon la méthode colorimétrique décrite par Charles E. Baumgartner dans Analytic Chemistry, 1987, 56, 27169-2718) indique un reliquat de 74% de PVA, soit une concentration de 22 mg de PVA par litre de vin blanc.

De nombreux essais de précipitation du PVA dans les vins blancs ont montré qu'avec des mélanges de silice colloïdale et de gélatine ou du caséinate de potassium seul ou en mélange avec des sols de silice basiques ou acides, on n'élimine que 55 à 80% du PVA initialement introduit. Les meilleurs agents de précipitation sont les tanins oenologiques comme de décrit l'exemple 4, mais il va de soi qu'on ne s'écarte pas de l'invention en utilisant l'un ou l'autre des mélanges des agents de précipitation mentionnés ci-dessus avec lesdits tanins oenologiques.

Exemple 4

L'invention s'applique également à la filtration de la bière, et cet exemple est très démonstratif de l'intérêt qu'il y a à utiliser ici un tanin pour éliminer l'alcool polyvinylique par insolubilisation et filtration.

6

Le procédé de filtration de la bière peut être différent de celui du vin, notamment en ce qui concerne l'alluvionnage qui n'est pas effectué dans les mêmes conditions que l'alluvionnage du vin. En effet, la suspension d'alluvionnage est réalisée dans l'eau plutôt que dans une portion du liquide à clarifier. La suspension aqueuse d'alluvionnage est injectée dans la bière, et cela ne se heurte à aucune contrainte de la fabrication puisque de l'eau de dilution peut être rajoutée pour obtenir les différentes qualités proposées à la clientèle.

Dans une cuve de 1.000 litres, munie d'une agitation par ancre, on introduit 720 litres d'eau et 6 sacs d'agent filtrant. Chaque sac est constitué d'un mélange de 20 kg de Clarcel® CBL et 0,283 kg de tanin oenologique extrait du tara enveloppé dans un sac soluble étanche de film PVA Nedol® EF 220 de 0,265 kg, le tout dans un sac de papier de protection. Les sacs de protection sont ôtés, et l'agent de filtration ensaché dans son enveloppe soluble est jeté dans la cuve ou il se délite sans émission aucune de poussière. Les emballages se dissolvent rapidement, ainsi que les tanins, tandis que l'agent de filtration minéral reste en suspension. On verse alors dans la cuve 0,848 litre d'acide phosphorique (d=1,70, $H_3PO_4$=85%) de qualité alimentaire pour ajuster le pH vers 2. L'alcool polyvinylique flocule en totalité dans l'eau d'alluvionnage sous forme d'un complexe insoluble qui sera ultérieurement retenu sur le filtre en compagnie de l'agent filtrant. On peut vérifier aisément que l'eau d'alluvionnage ne contient plus de PVA en quantité mesurable en constatant qu'en y ajoutant 10 ml de vin rouge tannique à une prise de 100 ml d'eau d'alluvionnage, on ne génère aucune turbidité supplémentaire; le dosage direct par colorimétrie selon Baumgartner confirme l'absence de PVA.

On introduit alors cette suspension directement dans la bière à raison de 1,5 litre de suspension (soit 250 g de Clarcel®) par hectolitre de bière, puis on passe sur un filtre muni comme habituellement d'une précouche de filtration.

L'introduction de la suspension d'agent filtrant ainsi constitué et conditionné apporte dans la bière filtrée les quantités approximatives de substances étrangères suivantes :

| | |
|---|---|
| glycérine | 2,9 mg/l |
| tanins | 10 à 20 mg/l |
| PVA résiduel | non mesurable |
| $PO_4H_3$ | 30 mg/l. |

L'utilisation de sacs d'agent filtrant constitué d'un mélange de 14 kg de Clarcel® CBR, 6 kg de cellulose en fibres de 10-50µm de diamètre et de 100-300µm de longueur (Clar-o-cel 20/8 de CECA S.A.) et 0,283 kg de tanin oenologique, ne modifie pas le résultat précédent, sauf en ce qui concerne le débâtissage du gâteau de filtration qui s'en trouve sensiblement amélioré.

Cette méthode de préparation d'une suspension d'agent filtrant dans l'eau peut tout aussi bien être transposée à la filtration des vins blancs ou rouges. Un alluvionnage à raison de 250 g/hl d'agent filtrant pratiqué dans ces conditions revient à ajouter au vin une quantité d'eau inférieure au 1% qu'autorise la réglementation européenne lorsque cela est indispensable à la mise en oeuvre (article 15, paragraphe 4 du règlement CEE n° 822/27).

Exemple 5

On illustre ici la fabrication d'une précouche selon l'invention. L'exemple est placé dans le cadre de la clarification de la bière qui se rapproche beaucoup des conditions de l'exemple 4, mais il est applicable à la filtration de tout autre liquide alimentaire précédée par le montage d'une telle précouche.

Dans 720 litres d'eau, on introduit 6 sacs contenant chacun 25 kg de Clarcel® DIC/B (CECA S.A.), 0,283 kg de tanin oenologique, chacun emballé dans un sac soluble étanche de film PVA Nedol® EF 220 de 0,265 kg, puis 0,848 litre d'acide phosphorique alimentaire. La suspension formée est dirigée sur un filtre industriel en même temps que 10.000 litres d'eau qui recirculent sur le filtre jusqu'à obtention d'un filtrat clair. On essore le filtre par application d'une pression de $CO_2$, ce qui élimine du même coup la majeure partie de la glycérine et de l'acide phosphorique ; il reste sur le filtre une précouche constituée de 120 kg d'agent filtrant et d'environ 180 litres d'eau contenant environ :

| | |
|---|---|
| glycérine | 13 mg/l |
| tanins | 85 mg/l |
| acide phophorique | 122 mg/l |
| PVA | non mesurable. |

On peut remplacer les 6 sacs de Clarcel DIC/B par 6 sacs de 25 kg de mélange prêt à l'emploi constitué de 22,5 kg de Clarcel DIC/B, 2,5 kg de fibres de cellulose et 0,283 kg de tanin oenologique, ce qui facilite le débâtissage du gâteau de filtration sans modification sensible de la qualité des produits filtrés.

A noter que dans tous les exemples précédents, le remplacement de l'agent filtrant diatomitique par une perlite, ou des mélanges de perlite avec des fibres de cellulose ou de polyéthylène conduit à des résultats très similaires.

## Revendications

**1.)** Auxiliaire technologique pour la clarification des liquides alimentaires aqueux constitué d'un agent de filtration enfermé dans une enveloppe étanche faite d'un film hydrosoluble, l'agent de filtration étant lui-même additionné d'un composé susceptible de précipiter toute la substance hydrosoluble constitutive de l'enveloppe dissoute dans le liquide alimentaire.

**2.)** Auxiliaire technologique pour la clarification des liquides alimentaires selon la revendication 1, caractérisé en ce que le film hydrosoluble est un film de polymère hydrosoluble.

**3.)** Auxiliaire technologique pour la clarification des liquides alimentaires selon la revendication 2, caractérisé en ce que le film de polymère hydrosoluble est un film d'alcool polyvinylique.

**4.)** Auxiliaire technologique pour la clarification des liquides alimentaires selon la revendication 3, caractérisé en ce que l'agent de filtration est pris dans le groupe constitué par les diatomites calcinées ou calcinées-activées, les perlites, la cellulose, les fibres de polyéthylène, seuls ou en mélange, et que le composé susceptible de précipiter l'alcool polyvinylique est un tanin.

**5.)** Procédé pour la clarification des liquides alimentaires comportant une étape de filtration avec mise en oeuvre d'un auxiliaire de filtration, caractérisé en ce que l'auxiliaire de filtration est sous forme de doses préemballées dans une enveloppe hydrosoluble.

**6.)** Procédé selon la revendication 5, caractérisé en ce que l'enveloppe hydrosoluble est constituée d'un film de polymère hydrosoluble.

**7.)** Procédé selon la revendication 6, caractérisé en ce que l'enveloppe hydrosoluble est constituée d'un film à base d'alcool polyvinylique.

**8.)** Procédé selon l'une ou l'autre des revendications 6 ou 7 caractérisé en ce que l'on disperse l'auxiliaire de filtration préemballé dans de l'eau ou dans du liquide alimentaire, et en ce que l'on ajoute dans la dispersion ainsi obtenue un agent de précipitation du polymère constituant l'enveloppe hydrosoluble.

**9.)** Procédé selon la revendication 8, caractérisé en ce que l'auxiliaire de filtration est un agent filtrant diatomitique et que l'agent de précipitation est un tanin.

**10.)** Procédé selon la revendication 9, caractérisé en ce que l'agent de précipitation est un tanin pris sous forme de poudre.

**11.)** Procédé selon la revendication 9, caractérisé en ce que le tanin est pris sous forme de solution.

**12.)** Procédé selon les revendications 6 et 7, caractérisé en ce que l'auxiliaire de filtration emballé sous enveloppe d'alcool polyvinylique contient, outre les agents filtrants, une substance capable de précipiter le polymère hydrosoluble de ses solutions.

**13.)** Procédé selon la revendication 12, caractérisé en ce que la substance capable de précipiter le polymère hydrosoluble de ses solutions est un tanin en poudre.

**14.)** Variante applicable aux vins, rouges ou blancs, du procédé selon la revendication 7, caractérisée en ce qu'elle comporte les étapes suivantes :
- préparation d'une suspension aqueuse concentrée d'auxiliaire de filtration à partir d'un mélange d'agent filtrant et d'un tanin emballé sous un film étanche hydrosoluble d'alcool polyvinylique,
- introduction et dispersion de la suspension dans le liquide à filtrer.

**15.)** Variante du procédé selon la revendication 7 pour son application à la filtration des vins tanniques, caractérisée en ce qu'elle comporte les étapes suivantes :
- préparation d'une suspension aqueuse concentrée d'auxiliaire de filtration à partir de l'agent filtrant conditionné sous film étanche hydrosoluble d'alcool polyvinylique,
- introduction et dispersion de la suspension dans le vin à filtrer.

**16.)** Procédé pour la clarification des liquides alimentaires par filtration comportant la constitution d'une précouche de filtration, caractérisé en ce que la précouche est montée avec un auxiliaire de filtration mis en oeuvre sous forme de doses préemballées dans une enveloppe hydrosoluble.

Office européen
des brevets

# RAPPORT DE RECHERCHE EUROPEENNE

Numero de la demande

EP 92 40 1019

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 495 116 (MCA GYROPALETTE)<br>* page 7; revendications 1-3 *<br>--- | 1,5 | B01J20/32<br>C12H1/02 |
| Y | PATENT ABSTRACTS OF JAPAN<br>vol. 6, no. 85 (C-103)(963) 22 Mai 1982<br>& JP-A-57 019 084 ( ASAHI ) 1 Février 1982<br>* abrégé *<br>--- | 1,5 | |
| A | JAPANESE PATENTS GAZETTE<br>Week 8520, 9 Avril 1985<br>Derwent Publications Ltd., London, GB;<br>& JP-A-60 061 504 (TOUKIYOU YUUKI) 9 Avril 1985<br>* abrégé *<br>--- | 1,2,3 | |
| A | US-A-4 267 145 (WYSONG)<br>--- | | |
| A | FR-A-2 250 687 (CIBA-GEIGY)<br>--- | | |
| A | EP-A-0 148 170 (MONSANTO)<br>* page 12, ligne 22 - page 13, ligne 8 *<br>--- | 1 | |
| A | US-A-3 424 588 (DOHMAN)<br>----- | | DOMAINES TECHNIQUES RECHERCHES (Int. Cl.5)<br><br>B01J<br>C12H<br>C12G |

Le présent rapport a été établi pour toutes les revendications

| Lieu de la recherche | Date d'achèvement de la recherche | Examinateur |
|---|---|---|
| LA HAYE | 24 JUILLET 1992 | WENDLING J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................
& : membre de la même famille, document correspondant

EPO FORM 1503 03.82 (P0402)

9